# EUROPEAN PATENT SPECIFICATION

(11) **EP 4 494 931 B1**
(45) Date of publication and mention of the grant of the patent: **20.05.2026**
(21) Application number: 24189374.2
(22) Date of filing: 18.07.2024
(51) Int. Cl.: B60N 2/01, B60N 2/015, B60N 2/02, B60N 2/90

(54) **COCKPIT FOR A MOTOR VEHICLE AND METHOD FOR THE RECONFIGURATION OF A COCKPIT**
COCKPIT FÜR EIN KRAFTFAHRZEUG UND VERFAHREN ZUR REKONFIGURATION EINES COCKPITS
HABITACLE DE VÉHICULE AUTOMOBILE ET PROCÉDÉ DE RECONFIGURATION D'UN HABITACLE

(30) Priority: 20.07.2023 IT 202300015258
(43) Date of publication of application: 22.01.2025
(73) Proprietor: FERRARI S.p.A., 41100 Modena (IT)
(72) Inventor: CONIGLIARO, Vito, 41100 Modena (IT); DE PAOLI, Alessandro Paolo, 41100 Modena (IT); GRANJARD, Thomas, 41100 Modena (IT); TAYLOR, Daniel Martin, 41100 Modena (IT)
(74) Representative: Studio Torta S.p.A.

(56) References cited:
- FR-A1- 2 890 911
- FR-A1- 3 108 277

## Description

### CROSS-REFERENCE TO RELATED APPLICATIONS

This patent application claims priority from Italian patent application no. 102023000015258 filed on July 20, 2023.

### TECHNICAL FIELD

This invention relates to a cockpit for a motor vehicle and a method for reconfiguring the cockpit.

### BACKGROUND

Motor vehicles comprise, in a known way:
- a passenger compartment defining a body;
- multiple wheels;
- a steering wheel arranged inside the passenger compartment which can be driven by a driver to steer the front wheels and thus enable the motor vehicle to follow a curved trajectory; and
- pedals comprising an accelerator and a brake that the driver can activate to increase the drive torque or exert a braking torque on the wheels respectively, so as to control the speed of the motor vehicle.

The passenger compartments of motor vehicles normally intended for use on the road implement the so-called "two-seater" configuration.

In this "two-seater" configuration, the passenger compartment also comprises a pair of front seats intended to be occupied by a driver and a passenger respectively, and arranged next to each other along a transverse direction of the motor vehicle orthogonal to a longitudinal direction defining a normal forward direction of the motor vehicle.

The steering wheel and the pedals are located opposite the driver's seat and are basically arranged in a left or right front corner of the vehicle.

With particular reference to sports motor vehicles, passenger compartments are known that implement the so-called "single-seater" configuration.

In this "single-seater" configuration, the passenger compartment comprises a single front seat arranged in a central position opposite the steering wheel and the pedals or passenger seats arranged to the side and/or set back from the central seat. An example of a seating system is disclosed in document FR3108277A1.

There is a need in the sector to provide motor vehicles that enable simple and easy reconfiguration between the above-mentioned "single-seater" and "two-seater" configurations.

### SUMMARY

The purpose of this invention is to produce a cockpit, which makes it possible to meet the need mentioned above.

The above-mentioned purpose is achieved with this invention, as it relates to a cockpit according to what is defined in claim 1.

This invention also relates to a method for reconfiguring a cockpit according to what is defined in claim 9.

### BRIEF DESCRIPTION OF THE DRAWINGS

In order to better understand this invention, a nonlimiting preferred embodiment thereof will now be described by way of example with reference to the accompanying drawings, in which:
- Figure 1 is a perspective view of a motor vehicle comprising a cockpit produced according to the precepts of this invention with parts removed for clarity;
- Figure 2 is a perspective view on a very enlarged scale of the cockpit in Figure 1, with parts removed for clarity and in a first, "two-seater" operating configuration;
- Figure 3 is a perspective view on a very enlarged scale of the cockpit in Figure 1, with parts removed for clarity and in a second, "single-seater" operating configuration;

### DESCRIPTION OF EMBODIMENTS

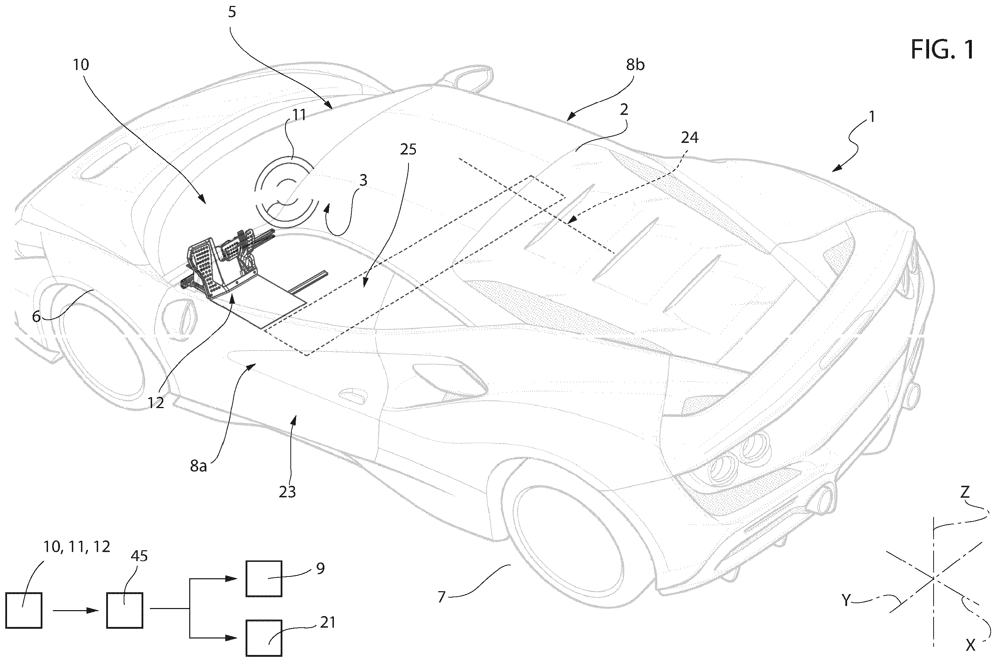

With reference to Figure 1, reference number 1 indicates a motor vehicle comprising a body 2 defining a passenger compartment 3.

It should be specified that, below in this description, expressions such as "above", "below", "in front of", "behind" and the like are used with reference to the normal movement of the motor vehicle 1.

It is also possible to define:
- a longitudinal axis X integral with the motor vehicle 1, arranged, in use, horizontal and parallel to a normal forward moving direction of the motor vehicle 1;
- a transversal axis Y integral with the motor vehicle 1, arranged, in use, horizontal and orthogonal to the axis X; and
- an axis Z integral with the motor vehicle 1, arranged, in use, vertical and orthogonal to the axes X, Y.

The motor vehicle 1 also comprises (Figure 1):
- a pair of front wheels 6 and a pair of back wheels 7;
- a known engine 9 only schematically illustrated in Figure 1 and operationally connected to the wheels 6 and/or 7 to exert drive torque on the wheels 6 and/or 7; and
- a brake system 21, also only schematically illustrated, in Figure 1 that can be driven to exert a braking torque on the wheels 6, 7.

The motor vehicle 1 also comprises (Figure 1):
- a windscreen 5 delimiting the passenger compartment 3 at the front; and
- a pair of doors 8a, 8b hinged to the body 2 that can be moved between a closed position wherein they delimit the passenger compartment 3 to the side and prevent entry into/exit from the passenger compartment 3 and an open position wherein they enable entry into/exit from the passenger compartment 3.

The body 2 also comprises a pair of door sills 23, 24 with longitudinal ends opposite each other. The door sills 23, 24 delimit the passenger compartment 3 and are adjacent to corresponding doors 8a, 8b when the doors 8a, 8b are in the respective closed positions.

The motor vehicle 1 also comprises control members 10 arranged in the passenger compartment 3 that the driver can activate to set a forward trajectory of the motor vehicle 1 with a desired speed.

In a known way, the control members 10 comprise:
- a steering wheel 11 arranged inside the passenger compartment 3 that can be driven by the driver; and
- pedals 12 also arranged inside the passenger compartment 3 that the driver can activate.

The control members 10 are connected to the engine 9, to the brake system 21, and to the wheels 6 and/or 7 implementing a technology known in the sector as "drive by wire".

In this description, the term "drive by wire" mode means that the steering wheel 11 does not have physical or mechanical connections with the wheels 6, 7.

The motor vehicle 1 also comprises a control unit 45 (Figure 1) programmed to receive, as input, the actions requested at the steering wheel 11 and pedals 12 and to generate, as output, control signals for the engine 9 and the brake system 21.

The passenger compartment 3 houses a front cockpit 25, only schematically illustrated in Figure 1, in a known way.

Advantageously, the cockpit 25 comprises:
a support structure 29;
- a pair of sides 97, 107 supported by the support structure 29 in a fixed manner in relation to the axis Y;
- between pairs of sides 100, 110; 98, 108; 99, 109 mounted on the support structure 29 in a sliding manner along the axis Y and each movable between a respective first and second position spaced apart from one another relative to the axis Y;
   the sides 97; 107 e 100; 110 are opposite each other in relation to the axis Y;
   each side 98, 108 is interposed between a respective side 97, 107 and fourth side 99, 109 along the axis Y;
   each side 99, 109 is placed between a corresponding side 98, 108 and a corresponding side 100, 110 the axis Y;
   the cockpit 25 can be shifted to a two-seater configuration, wherein it comprises:
- a seat 26 laterally delimited by the sides 97, 107 and the sides 98, 108 arranged in respective first positions; and
- a seat 27 laterally delimited by the sides 99, 109 and the sides 100, 110 arranged in respective first positions, and placed alongside the seat 26 parallel to the axis Y;
   the cockpit 25 can be selectively arranged in a second, single-seater configuration, wherein it comprises a single seat 28 laterally delimited by the sides 99, 109 arranged in the second position and by the sides 100, 110 arranged in said second position.

More specifically, the support structure 29 comprises:
- a frame 35 formed from a seat cushion 36 and a backrest 37 having corresponding upper and lower end edges 38, 39 next to each other; and
- a pair of headrests 50, 51 projecting overhanging above an upper end edge of the seat cushion 36 opposite the end edge 38.

The greatest dimension of the seat cushion 36 and the backrest 37 is parallel to the axis Y.

The support structure 29 also wholly defines the seats 26, 27 in the first, two-seater configuration of the cockpit 25 and the seat 28 in the second, single-seater configuration of the cockpit 25.

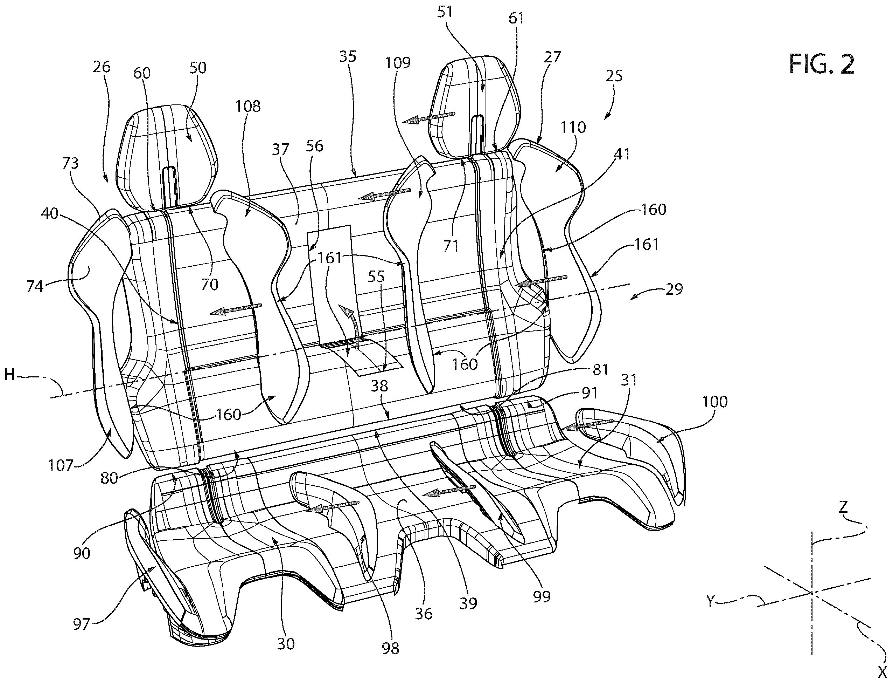

With reference to the first, "two-seater" configuration illustrated in Figure 2, the seats 26, 27 each comprise:
- a respective seat cushion 30, 31;
- a respective backrest 40, 41; and
- a respective headrest 50, 51.

Each backrest 40, 41 comprises, in particular:
- a corresponding upper edge 60, 61 extended along the axis Y and connected to a lower edge 70, 71 of the corresponding headrest 50, 51; and
- a corresponding lower edge 80, 81 extended along the axis Y and connected to a rear and upper edge 90, 91 of the corresponding seat cushion 30, 31.

The sides 97, 98; 99, 100 project overhanging above the seat cushion 36 of the support structure 29.

The sides 107, 108; 109, 110 project overhanging in front of the backrest 37 of the support structure 29.

The sides 97, 98; 99, 100 are arranged on corresponding opposite sides of the corresponding seat cushion 30; 31.

The sides 107, 108; 109, 110 are arranged on respective opposite sides of the corresponding backrest 40, 41.

In particular, each side 97, 98; 99, 100; 107, 108; 109, 110 comprises (Figure 2):
- a corresponding edge 160 fixed to the corresponding seat cushion 30; 31 or backrest 40; 41; and
- a corresponding free edge 161 opposite the corresponding edge 160.

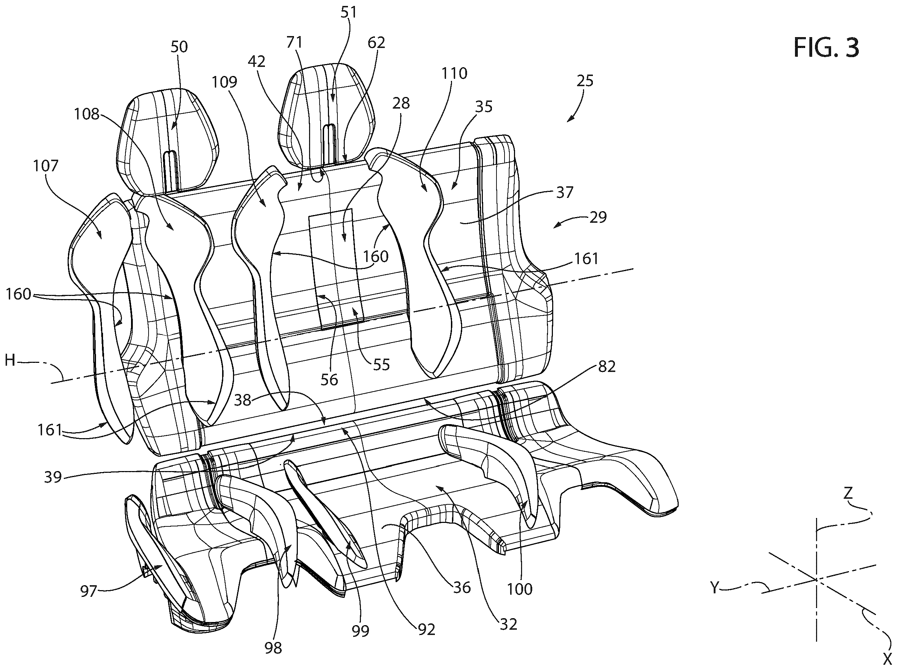

The sides 107, 108; 109, 110 each comprise a support 73 and a cushion 74 supported by the support 70 illustrated in Figure 3.

The seat 26 is arranged on the side of the door sill 23 and the other seat 24 is arranged on the side of the other door sill 24.

The seat 27 is intended to be occupied by the driver and the other seat 26 is intended to be occupied by the passenger.

More precisely, the seat 26 is interposed along the axis Y between the door sill 23 and the seat 27.

The seat 27 is interposed along the axis Y between the seat 26 and the door sill 24.

The sides 97, 98; 99; 100; 107, 108; 109, 110 are arranged so that they diverge from each other, moving from the respective edges 160 to the corresponding edges 161 so as to enable easy access for the driver and passenger, respectively, to the respective seats 27, 26.

The sides 98, 99; 108, 109 are arranged so that they converge with each other, moving from the respective edges 160 to the corresponding edges 161.

The headrest 50 is mounted in a fixed manner on the seat cushion 36 with reference to the axis Y.

The headrest 51 is mounted on the seat cushion 36 so that it can move between:
- a respective first position (Figure 2) assumed when the cockpit 25 is in the first, two-seater configuration in it is arranged above the respective backrest 41; and
- a respective second position (Figure 3) assumed when the cockpit 25 is in the second, single-seater configuration wherein it is arranged above the respective backrest 42.

More specifically, in the second, "single-seater" configuration of the cockpit 25, the seat 28 is arranged equally distant from the door sills 23, 24 along the axis Y, and is intended to be occupied by the driver.

The seat cushion 36 defines the seat cushion 30, 31, 32 and the backrest 37 defines the backrests 40, 41, 42.

The backrest 42 comprises, in particular:
- a corresponding upper edge 62 extended along the axis Y and arranged at the lower edge 71 of the headrest 51; and
- a corresponding lower edge 82 extended along the axis Y and arranged at a rear and upper edge 92 of the seat cushion 32.

The cockpit 25 comprises, in addition, an armrest 55 hinged to the seat cushion 36 of the support structure 29.

The armrest 55 can be moved between:
- an open position (illustrated in Figure 2) assumed when the cockpit 25 is in the first, two-seater position, wherein it projects in front of the frame 35 and extends parallel to the axis X in a position interposed parallel to the axis Y between the seats 26, 27; and
- a closed position (illustrated in Figure 3) assumed when the cockpit 25 is in the second, single-seater configuration, wherein it is housed in a seat 56 defined by the seat cushion 32 and extends transversely to the axes X, Y.

In particular, the armrest 55 is hinged to the seat cushion 32 around an axis H parallel to the axis Y so as it can be rotated parallel to the axis Y between the above-mentioned open and closed positions.

In the closed position, the armrest 55 is level with the remaining part of the seat cushion 32.

The transition of the cockpit 25 from the first, two-seater configuration to the second, single-seater configuration occurs via:
- the rotation of the armrest 55 from the open position to the closed position around the axis H;
- the translation of the sides 98, 108 of the same distance L parallel to the axis Y from the respective first positions towards the corresponding second positions;
- the simultaneous translation of the headrest 51 and the sides 99, 109 of the same distance L parallel to the axis Y from the respective first position towards the corresponding second position; and
- the translation of the sides 100, 110 of the same distance L parallel to the axis Y from the respective first position towards the respective second position.

In the example illustrated, the translation of the headrest 51 from the corresponding first position to the corresponding second position occurs simultaneously to the translation of the sides 98, 99 100; 108, 109, 110 parallel to the axis Y from the respective first positions towards the corresponding second positions.

The transition of the cockpit 25 from the first to the second configuration, and vice versa, also occurs manually or by driving an actuator (not illustrated).

In a way not described in detail since not necessary for this invention, the pedals 12 and the steering wheel 11 can be moved along the axis Y to encourage the transformation of the motor vehicle 1 between the first and second configuration.

In particular, the pedals 12 and the steering wheel 11 may be moved parallel to the axis Y between:
- a third position (Figure 1) assumed when the cockpit 25 is in the first, "two-seater" configuration and wherein they face the seat 27; and
- a fourth position (not illustrated) assumed when the cockpit 25 is in the second, "single-seater" configuration and wherein they face the seat 28.

The pedals 12 and the steering wheel 11 are arranged adjacent to the door sill 23 when they are arranged in the third position. In this third position, a first distance between the pedals 12 and the steering wheel 11, and the door sill 23 is less than a second distance between the pedals 12 and the steering wheel 11, and the door sill 24. The above-mentioned first and second distance are measured along the axis Y.

The pedals 12 and the steering wheel 11 are arranged in a position midway between the door sills 23, 24 when they are arranged in the fourth position. In this fourth position, the pedals 12 and the steering wheel 11 are equally spaced apart from the door sills 23, 24 along the axis Y.

The operation of the cockpit 25 of the motor vehicle 1 is described starting from a condition wherein the cockpit 25 is in the first, "two-seater" configuration.

In this first, "two-seater" configuration, the seats 27, 26 are arranged in respective first positions and are intended to be occupied by the driver and the passenger respectively.

The seat 26 is interposed between the door sill 23 and the seat 27 and the seat 27 is interposed between the seat 26 and the door sill 24 parallel to the axis Y.

More specifically, the seat 26 comprises the seat cushion 30, the backrest 40, and the headrest 50.

The seat 26 is also delimited laterally on corresponding opposite sides by the side 97 and the side 98 arranged in the first position, and by the sides 107, 108 also arranged in the corresponding first positions.

The seat 27 comprises the seat cushion 31, the backrest 41, and the headrest 50 arranged in the respective first position.

The seat 27 is also delimited laterally on corresponding opposite sides by the sides 99, 100 and 109, 110 arranged in the respective first positions.

The armrest 55 is arranged in the open position wherein it is extended parallel to the axis X and interposed parallel to the axis Y between the backrests 40, 41.

The pedals 11 and the steering wheel 12 are arranged in the third position, wherein they face the seat 27 along the axis X, to enable the driver to guide them.

If one wishes to reconfigure the motor vehicle 1, so as to arrange the cockpit 25 in the second, "single-seater" configuration, it is enough to drive the actuator so as to cause:
- the rotation of the armrest 55 from the open position to the closed position around the axis H;
- the translation of the sides 98, 108 of the same distance L parallel to the axis Y from the respective first positions towards the corresponding second positions;
- the simultaneous translation of the headrest 51 and the sides 99, 109 of the same distance L parallel to the axis Y from the respective first position towards the corresponding second position; and
- the translation of the headrest 51 of the sides 100, 110 of the same distance L parallel to the axis Y from the respective first position towards the respective second position.

At the end of the transition, the cockpit 25 is in the second configuration wherein:
- the seat 28 is in the position midway between the door sills 23, 24 and is delimited on the side by the sides 99, 100; 109, 110 arranged in the respective second positions.

The pedals 11 and the steering wheel 12 are also moved parallel to the axis Y, in a known way not illustrated, from the third position to the fourth position, wherein they face the seat 28 along the axis X, to enable the driver to guide them.

Irrespective of the fact that the cockpit 25 is in the first "two-seater" configuration, or in the second "single-seater" configuration, the control members 10 control the engine 9, the wheels 6, 7, and the brake system 21 implementing a technology known in the sector as "drive by wire".

The advantages enabled by this invention will be apparent from an examination thereof.

In particular, the cockpit 25 can be moved between the first, "two-seater" configuration wherein it defines the seat 27 for the driver and the seat 26 for the passenger next to each other parallel to the axis Y, and the second, "single-seater" configuration wherein it defines only the seat 28 for the driver, simply by translating, parallel to the axis Y, the sides 98, 99, 100; 108, 109, 110 and the headrest 51 from the respective first positions to the respective second positions and rotating the armrest 55 from the open position to the closed position.

In this way, the motor vehicle 1 can be quickly and simply made more suitable for road use when the cockpit 25 assumes the first, "two-seater" configuration or sports use wherein the cockpit 25 assumes the second, "single-seater" configuration.

Finally, it is clear that changes may be made to the cockpit 25 and to the reconfiguration method implemented according to this invention, and variations produced thereto that, in any case, do not depart from the scope of protection defined by the claims.

In particular, in the first, "two-seater" configuration, the seat 27 for the driver could be arranged next to the door sill 24 and the seat 26 for the passenger could be arranged next to the other door sill 23, thus implementing a right-hand drive mode in the motor vehicle 1.

In this case, the sides 100, 110 would be fixed in relation to the support structure 29 and the sides 97, 107; 98, 108; 99, 109 would be mounted on the support structure 29 so they can slide along the axis Y to and from the sides 100, 110 to transition the cockpit 25 between the first and second configuration.

The cockpit could comprise just the sides 97, 98, 99, 100 or just the sides 107, 108, 109, 110.

## Claims

1. A cockpit (25) for a motor vehicle (1), **characterized in that** it comprises:
- a support structure (29);
- a first side (97; 107) supported by said support structure (29); and
- a second, third and fourth side (100, 110; 98, 108; 99, 109) mounted on said support structure (29) in a sliding manner along a first axis (Y) and each movable between a respective first and second position spaced apart from one another relative to said first axis (Y);
said first side (97; 107) and said second side (100; 110) being opposite one another with reference to said first axis (Y);
said third side (98, 108) being interposed between said first side (97, 107) and said fourth side (99, 109) along said first axis (Y);
said fourth side (99, 109) being interposed between said third side (98, 108) and said second side (100, 110) along said first axis (Y);
said cockpit (25) being available in a first two-seater configuration, wherein it comprises:
- a first seat (26) laterally delimited by said first side (97, 107) and by said third side (98, 108) arranged in the respective first positions; and
- a second seat (27) laterally delimited by said fourth side (99; 109) and by said second side (100, 110) arranged in the respective first positions;
said first and second seats (26, 27) being next to one another parallel to said first axis (Y);
said cockpit (25) being available in a second single-seater configuration, wherein it comprises one single third seat (28) laterally delimited by said fourth side (99, 109) arranged in said second position and by said second side (100, 110) arranged in said second position.

2. The cockpit according to claim 1, **characterized in that** said first side (97, 107) is mounted in a fixed manner relative to said support structure (29) with reference to said first axis (Y), and **in that** said second side (100, 110), said third side (98, 108) and said fourth side (99, 109) are arranged in the respective first positions at respective first distances from said first side (97, 107) along said first axis (Y) and in the respective second positions at respective second distances, which are smaller than said first distances, from said first side (97, 107) along said first axis (Y).

3. The cockpit according to claim 1 or 2, **characterized in that** said support structure (29) defines:
- a first seat cushion (30) and a first backrest (40) of said first seat (26);
- a second seat cushion (31) and a second backrest (41) of said second seat (27); and
- a third seat cushion (32) and a third backrest (42) of said second seat (28);
said third seat cushion (32) being interposed, along said first axis (Y), between said first seat cushion (30) and said second seat cushion (31);
said third backrest (42) being interposed, along said first axis (Y), between said first backrest (40) and said second backrest (41).

4. The cockpit according to any one of the preceding claims, **characterized in that** it comprises an armrest (55), which is articulated on said support structure and is movable between:
- an open position assumed when said cockpit (25) is in said first two-seater configuration and wherein it projects from said support structure (29) in a position interposed between said first and second seats (26, 27); and
- a closed position assumed when said cockpit (25) is in said second single-seater configuration and wherein it is housed in a relative seat (56) of said support structure (29) arranged in the area of said third seat (28).

5. The cockpit according to any one of the preceding claims, **characterized in that** said first seat (26) comprises a first headrest (50), which is fixed relative to said support structure (29);
said support structure (29) comprising, in turn:
- a second head rest (51) supported by said support structure (29) in a movable manner between a third position assumed in said first configuration and a fourth position assumed in said second configuration along said first axis (Y) from and to the first headrest (50);
said second headrest (51) being arranged at a first distance from said headrest (50) in said third position and at a second distance from said first headrest (50) in said fourth position; said second distance being smaller than said first distance;
said first seat (26) comprising said first headrest (50);
said second seat (27) comprising said second headrest (51) arranged in said third position and said third seat (28) comprising said second headrest (51) arranged in said fourth position.

6. The cockpit according to any one of the preceding claims, **characterized in that** said first side (97; 107), said second side (100; 110), said third side (98; 108) and said fourth side (99; 109) each comprise:
- a first edge (160) constrained to said support structure (29); and
- a second edge (161) opposite said first edge (160); said first side (97; 107) and said third side (98; 108) diverging from one another, moving from the respective first edge (160) to the corresponding second edge (161);
said fourth side (99; 109) and said second side (100; 110) diverging from one another, moving from the respective first edge (160) to the corresponding second edge (161).

7. The cockpit according to any one of the preceding claims, **characterized in that** said first side (107) and said third side (108) laterally delimit said first backrest (40) and said fourth side (109) and said second side (110) laterally delimit said second backrest (41) in the respective first positions;
said third side (108) and said fourth side (109) laterally delimiting said third backrest (42) in the respective second positions;
said cockpit (25) further comprising:
- a further first side (97) supported by said support structure (29) in a fixed position relative to said first axis (Y);
- a further second side (100), a further third side (98) and a further fourth side (99), each movable between respective further first and second positions along said first axis (Y);
said further third side (98) being interposed between said further first side (97) and said further fourth side (99) along said first axis (Y);
said further fourth side (99) being interposed between said further third side (98) and said further second side (100) along said first axis (Y);
said further first side (97) and said further third side (98) laterally delimiting said first seat cushion (30) and said further fourth side (99) and said further second side (100) laterally delimiting said second seat cushion (31) in the respective further first positions;
said further fourth side (99) and said further second side (97) laterally delimiting said third seat cushion (32) in the respective further second positions.

8. A motor vehicle (1) comprising:
- a passenger compartment (3) defining a second axis (X) arranged, in use, parallel to a forward moving direction of the motor vehicle (1) and orthogonal said first axis (Y);
- a plurality of driving members (10; 11, 12), which are housed inside said passenger compartment (3) and can be operated by a driver in order to control the trajectory and the speed of said motor vehicle (1);
- at least one control member (6, 7, 9, 21) connected to at least one driving member (10; 11, 12) through a drive by wire mode; and
- said cockpit (25) according to any one of the preceding claims.

9. A method for the configuration of a cockpit (25) for a motor vehicle (1);
said cockpit (25) comprising:
- a support structure (29);
- a first side (97; 107) supported by said support structure (29); and
- a second, third and fourth side (100, 110; 98, 108; 99, 109) mounted on said support structure (29) in a sliding manner along a first axis (Y) and each movable between a respective first and second position spaced apart from one another relative to said first axis (Y);
said first side (97; 107) and said second side (100; 110) being opposite one another with reference to said first axis (Y);
said third side (98, 108) being interposed between said first side (97, 107) and said fourth side (99, 109) along said first axis (Y);
said fourth side (99, 109) being interposed between said third side (98, 108) and said second side (100, 110) along said first axis (Y);
**characterized in that** it comprises the steps of:
i) arranging said cockpit (25) to a first two-seater configuration, wherein it comprises:
- a first seat (26) laterally delimited by said first side (97, 107) and by said third side (98, 108) arranged in respective first positions; and
- a second seat (27) laterally delimited by said fourth side (99; 109) and by said second side (100, 110) arranged in respective first positions;
said first and second seats (26, 27) being next to one another parallel to said first axis (Y);
**characterized in that** it comprises the step ii) of arranging said cockpit (25) to a second single-seater configuration, wherein it comprises one single third seat (28) laterally delimited by said fourth side (99, 109) and by said second side (98, 108) arranged in the respective second positions.

10. The method according to claim 9, **characterized in that** said step ii) comprises the step iii) of moving said second side (100, 110), said third side (98, 108) and said fourth side (99, 109) closer to said first side (97, 107) parallel to said first axis (Y).

11. The method according to claim 9 or 10, **characterized in that** it comprises the step iv) of moving an armrest (55) articulated on said support structure (29) between:
- an open position assumed when said cockpit (25) is in said first two-seater configuration and wherein it projects from said support structure (29) in a position interposed between said first and second seats (26, 27); and
- a closed position assumed when said cockpit (25) is in said second single-seater configuration and wherein it is housed in a relative seat (56) of said support structure (29) arranged in the area of said third seat (28).

12. The method according to any one of the claims from 9 to 11, **characterized in that** said step iii) comprises the steps of:
v) moving said third side (98, 108) closer to said first side (97, 107);
vi) moving said fourth side (99, 109) closer to said first side (97, 107);
vii) moving said second side (100, 110) closer to said first side (97, 107);
said steps v), vi) and vii) being carried out, time-wise, in sequence.

13. The method according to claim 12, **characterized in that** it comprises the step viii) of moving a second headrest (51) supported by said support structure (29) in a movable manner along said first axis (Y) from and to a first headrest (50) fixed to said support structure (29) between a first position assumed in said first configuration of said cockpit (25) and a fourth position assumed in said second configuration of said cockpit (25);
said second headrest (51) being arranged at a first distance from said first headrest (50) in said third position and at a second distance from said first headrest (50) in said fourth position; said second distance being smaller than said first distance;
said first seat (26) comprising said first headrest (50);
said second seat (27) comprising said second headrest (51) arranged in said third position and said third seat (28) comprising said second headrest (51) arranged in said fourth position;
said step viii) being carried out simultaneously with said step vi).

14. The method according to any one of the claims from 9 to 13, wherein said support structure (29) defines:
- a first seat cushion (30) and a first backrest (40) of said first seat (26);
- a second seat cushion (31) and a second backrest (41) of said second seat (27); and
- a third seat cushion (32) and a third backrest (42) of said second seat (28);
said third seat cushion (32) being interposed, along said first axis (Y), between said first seat cushion (30) and said second seat cushion (31);
said third backrest (42) being interposed, along said first axis (Y), between said first backrest (40) and said second backrest (41);
said third side (108) and said fourth side (109) laterally delimiting said third backrest (42) in the respective second positions;
said cockpit (25) further comprising:
- a further first side (97) supported by said support structure (29) in a fixed position relative to said first axis (Y);
- a further second side (100), a further third side (98) and a further fourth side (99), each movable between respective further first and second positions along said first axis (Y);
said further third side (98) being interposed between said first side (97) and said fourth side (109) along said first axis (Y);
said further fourth side (99) being interposed between said third side (98) and said second side (100) along said first axis (Y);
said further first side (97) and said further third side (98) laterally delimiting said first seat cushion (30) and said further fourth side (99) and said further second side (100) laterally delimiting said second seat cushion (31) in the respective further first positions;
said further fourth side (99) and said further second side (97) laterally delimiting said third seat cushion (32) in the respective further second positions.
said step ii) comprises the further step vi) of moving said further second side (100), said further third side (98) and said further fourth side (99) to said further first side (97) parallel to said first axis (Y).

## Patentansprüche

1. Cockpit (25) für ein Kraftfahrzeug (1), **dadurch gekennzeichnet, dass** es umfasst:
- eine Trägerstruktur (29);
- eine erste Seite (97; 107), die von der Trägerstruktur (29) getragen wird; und
- eine zweite, dritte und vierte Seite (100, 110; 98, 108; 99, 109), die gleitend entlang einer ersten Achse (Y) an der Trägerstruktur (29) montiert sind und jeweils zwischen einer jeweiligen ersten und zweiten Position beweglich sind, die relativ zur ersten Achse (Y) voneinander beabstandet sind;
wobei die erste Seite (97; 107) und die zweite Seite (100; 110) in Bezug auf die erste Achse (Y) einander gegenüberliegen;
wobei die dritte Seite (98, 108) zwischen der ersten Seite (97, 107) und der vierten Seite (99, 109) entlang der ersten Achse (Y) eingefügt ist;
wobei die vierte Seite (99, 109) zwischen der dritten Seite (98, 108) und der zweiten Seite (100, 110) entlang der ersten Achse (Y) eingefügt ist;
wobei das Cockpit (25) in einer ersten Zweisitzerkonfiguration verfügbar ist, wobei es Folgendes umfasst:
- einen ersten Sitz (26), der seitlich durch die erste Seite (97, 107) und durch die dritte Seite (98, 108) begrenzt ist, die in den jeweiligen ersten Positionen angeordnet sind; und
- einen zweiten Sitz (27), der seitlich durch die vierte Seite (99; 109) und durch die zweite Seite (100, 110) begrenzt wird, die in den jeweiligen ersten Positionen angeordnet sind;
wobei der erste und der zweite Sitz (26, 27) parallel zur ersten Achse (Y) nebeneinander liegen;
wobei das Cockpit (25) in einer zweiten Einzelsitzerkonfiguration verfügbar ist, in der es einen einzelnen dritten Sitz (28) umfasst, der seitlich durch die vierte Seite (99, 109), die in der zweiten Position angeordnet ist, und durch die zweite Seite (100, 110), die in der zweiten Position angeordnet ist, begrenzt ist.

2. Cockpit nach Anspruch 1, **dadurch gekennzeichnet, dass** die erste Seite (97, 107) relativ zur Trägerstruktur (29) in Bezug auf die erste Achse (Y) fest montiert ist und dadurch, dass die zweite Seite (100, 110), die dritte Seite (98, 108) und die vierte Seite (99, 109) in den jeweiligen ersten Positionen in jeweiligen ersten Abständen von der ersten Seite (97, 107) entlang der ersten Achse (Y) und in den jeweiligen zweiten Positionen in jeweiligen zweiten Abständen, die kleiner als die ersten Abstände sind, von der ersten Seite (97, 107) entlang der ersten Achse (Y) angeordnet sind.

3. Cockpit nach Anspruch 1 oder 2, **dadurch gekennzeichnet, dass** die Trägerstruktur (29) definiert:
- ein erstes Sitzpolster (30) und eine erste Rückenlehne (40) des ersten Sitzes (26);
- ein zweites Sitzpolster (31) und eine zweite Rückenlehne (41) des zweiten Sitzes (27); und
- ein drittes Sitzpolster (32) und eine dritte Rückenlehne (42) des zweiten Sitzes (28);
wobei das dritte Sitzpolster (32) entlang der ersten Achse (Y) zwischen dem ersten Sitzpolster (30) und dem zweiten Sitzpolster (31) eingefügt ist;
wobei die dritte Rückenlehne (42) entlang der ersten Achse (Y) zwischen der ersten Rückenlehne (40) und der zweiten Rückenlehne (41) eingefügt ist.

4. Cockpit nach einem der vorhergehenden Ansprüche, **dadurch gekennzeichnet, dass** es eine Armlehne (55) umfasst, die an der Trägerstruktur angelenkt ist und zwischen diesen beweglich ist:
- einer offenen Position, die eingenommen wird, wenn sich das Cockpit (25) in der ersten Zweisitzerkonfiguration befindet, und in der es von der Trägerstruktur (29) in einer Position vorsteht, die zwischen dem ersten und dem zweiten Sitz (26, 27) eingefügt ist; und
- einer geschlossenen Position, die eingenommen wird, wenn sich das Cockpit (25) in der zweiten Einzelsitzerkonfiguration befindet und in der es in einem relativen Sitz (56) der Trägerstruktur (29) untergebracht ist, der im Bereich des dritten Sitzes (28) angeordnet ist

5. Cockpit nach einem der vorhergehenden Ansprüche, **dadurch gekennzeichnet, dass** der erste Sitz (26) eine erste Kopfstütze (50) aufweist, die relativ zur Trägerstruktur (29) befestigt ist;
wobei die Trägerstruktur (29) wiederum umfasst:
- eine zweite Kopfstütze (51), die von der Trägerstruktur (29) beweglich zwischen einer dritten Position, die in der ersten Konfiguration eingenommen wird, und einer vierten Position, die in der zweiten Konfiguration eingenommen wird, entlang der ersten Achse (Y) von und zu der ersten Kopfstütze (50) weg-/hinführend getragen wird;
wobei die zweite Kopfstütze (51) in der dritten Position in einem ersten Abstand von der Kopfstütze (50) und in der vierten Position in einem zweiten Abstand von der ersten Kopfstütze (50) angeordnet ist; wobei der zweite Abstand kleiner als der erste Abstand ist;
wobei der erste Sitz (26) die erste Kopfstütze (50) umfasst;
wobei der zweite Sitz (27) die zweite Kopfstütze (51) umfasst, die in der dritten Position angeordnet ist, und der dritte Sitz (28) die zweite Kopfstütze (51) umfasst, die in der vierten Position angeordnet ist.

6. Cockpit nach einem der vorhergehenden Ansprüche, **dadurch gekennzeichnet, dass** die erste Seite (97; 107), die zweite Seite (100; 110), die dritte Seite (98; 108) und die vierte Seite (99; 109) jeweils umfassen:
- eine erste Kante (160), die an die Trägerstruktur (29) gebunden ist; und
- eine zweite Kante (161), die der ersten Kante (160) gegenüberliegt;
wobei die erste Seite (97; 107) und die dritte Seite (98; 108) voneinander divergieren und sich von der jeweiligen ersten Kante (160) zu der entsprechenden zweiten Kante (161) bewegen;
wobei die vierte Seite (99; 109) und die zweite Seite (100; 110) voneinander divergieren und sich von der jeweiligen ersten Kante (160) zu der entsprechenden zweiten Kante (161) bewegen.

7. Cockpit nach einem der vorhergehenden Ansprüche, **dadurch gekennzeichnet, dass** die erste Seite (107) und die dritte Seite (108) die erste Rückenlehne (40) seitlich begrenzen und die vierte Seite (109) und die zweite Seite (110) die zweite Rückenlehne (41) in den jeweiligen ersten Positionen seitlich begrenzen;
wobei die dritte Seite (108) und die vierte Seite (109) die dritte Rückenlehne (42) in den jeweiligen zweiten Positionen seitlich begrenzen;
wobei das Cockpit (25) ferner Folgendes umfasst:
- eine weitere erste Seite (97), die von der Trägerstruktur (29) in einer festen Position relativ zur ersten Achse (Y) getragen wird;
- eine weitere zweite Seite (100), eine weitere dritte Seite (98) und eine weitere vierte Seite (99), die jeweils zwischen einer jeweiligen weiteren ersten und zweiten Position entlang der ersten Achse (Y) bewegbar sind;
wobei die weitere dritte Seite (98) zwischen der weiteren ersten Seite (97) und der weiteren vierten Seite (99) entlang der ersten Achse (Y) eingefügt ist;
wobei die weitere vierte Seite (99) zwischen der weiteren dritten Seite (98) und der weiteren zweiten Seite (100) entlang der ersten Achse (Y) eingefügt ist;
wobei die weitere erste Seite (97) und die weitere dritte Seite (98) das erste Sitzpolster (30) seitlich begrenzen und die weitere vierte Seite (99) und die weitere zweite Seite (100) das zweite Sitzpolster (31) in den jeweiligen weiteren ersten Positionen seitlich begrenzen;
wobei die weitere vierte Seite (99) und die weitere zweite Seite (97) das dritte Sitzpolster (32) in den jeweiligen weiteren zweiten Positionen seitlich begrenzen.

8. Kraftfahrzeug (1), umfassend:
- einen Fahrgastraum (3), der eine zweite Achse (X) definiert, die im Gebrauch parallel zu einer Vorwärtsfahrtrichtung des Kraftfahrzeugs (1) und orthogonal zu der ersten Achse (Y) angeordnet ist;
- eine Vielzahl von Antriebselementen (10; 11, 12), die im Inneren des Fahrgastraums (3) untergebracht sind und von einem Fahrer bedient werden können, um die Flugbahn und die Geschwindigkeit des Kraftfahrzeugs (1) zu steuern;
- mindestens ein Steuerelement (6, 7, 9, 21), das durch einen Drive-by-Wire-Modus mit mindestens einem Antriebselement (10; 11, 12) verbunden ist; und
- das Cockpit (25) nach einem der vorhergehenden Ansprüche.

9. Verfahren zur Konfiguration eines Cockpits (25) für ein Kraftfahrzeug (1);
wobei das Cockpit (25) umfasst:
- eine Trägerstruktur (29);
- eine erste Seite (97; 107), die von der Trägerstruktur (29) getragen wird; und
- eine zweite, dritte und vierte Seite (100, 110; 98, 108; 99, 109), die gleitend entlang einer ersten Achse (Y) an der Trägerstruktur (29) montiert sind und jeweils zwischen einer jeweiligen ersten und zweiten Position beweglich sind, die relativ zur ersten Achse (Y) voneinander beabstandet sind;
wobei die erste Seite (97; 107) und die zweite Seite (100; 110) in Bezug auf die erste Achse (Y) einander gegenüberliegen;
wobei die dritte Seite (98, 108) zwischen der ersten Seite (97, 107) und der vierten Seite (99, 109) entlang der ersten Achse (Y) eingefügt ist;
wobei die vierte Seite (99, 109) zwischen der dritten Seite (98, 108) und der zweiten Seite (100, 110) entlang der ersten Achse (Y) eingefügt ist;
**dadurch gekennzeichnet, dass** es folgende Schritte umfasst:
i) Anordnen des Cockpits (25) in einer ersten Zweisitzerkonfiguration, wobei es umfasst:
- einen ersten Sitz (26), der seitlich durch die erste Seite (97, 107) und durch die dritte Seite (98, 108) begrenzt ist, die in jeweiligen ersten Positionen angeordnet sind; und
- einen zweiten Sitz (27), der seitlich durch die vierte Seite (99; 109) und durch die zweite Seite (100, 110) begrenzt wird, die in jeweiligen ersten Positionen angeordnet sind;
wobei der erste und der zweite Sitz (26, 27) parallel zur ersten Achse (Y) nebeneinander liegen;
**dadurch gekennzeichnet, dass** es den Schritt ii) des Anordnens des Cockpits (25) in einer zweiten Einzelsitzerkonfiguration umfasst, wobei es einen einzelnen dritten Sitz (28) umfasst, der seitlich durch die vierte Seite (99, 109) und durch die zweite Seite (98, 108) begrenzt ist, die in den jeweiligen zweiten Positionen angeordnet sind.

10. Verfahren nach Anspruch 9, **dadurch gekennzeichnet, dass** der Schritt ii) den Schritt iii) des Bewegens der zweiten Seite (100, 110), der dritten Seite (98, 108) und der vierten Seite (99, 109) näher an die erste Seite (97, 107) parallel zur ersten Achse (Y) umfasst.

11. Verfahren nach Anspruch 9 oder 10, **dadurch gekennzeichnet, dass** es den Schritt iv) des Bewegens einer Armlehne (55), die an der Trägerstruktur (29) angelenkt ist, zwischen diesen umfasst:
- einer offenen Position, die eingenommen wird, wenn sich das Cockpit (25) in der ersten Zweisitzerkonfiguration befindet, und in der es von der Trägerstruktur (29) in einer Position vorsteht, die zwischen dem ersten und dem zweiten Sitz (26, 27) eingefügt ist; und
- einer geschlossenen Position, die eingenommen wird, wenn sich das Cockpit (25) in der zweiten Einzelsitzerkonfiguration befindet und in der es in einem relativen Sitz (56) der Trägerstruktur (29) untergebracht ist, der im Bereich des dritten Sitzes (28) angeordnet ist

12. Verfahren nach einem der Ansprüche 9 bis 11, **dadurch gekennzeichnet, dass** der Schritt iii) die folgenden Schritte umfasst:
v) Bewegen der dritten Seite (98, 108) näher an die erste Seite (97, 107);
vi) Bewegen der vierten Seite (99, 109) näher an die erste Seite (97, 107);
vii) Bewegen der zweiten Seite (100, 110) näher an die erste Seite (97, 107);
wobei die Schritte v), vi) und vii) zeitlich nacheinander durchgeführt werden.

13. Verfahren nach Anspruch 12, **dadurch gekennzeichnet, dass** es den Schritt viii) des Bewegens einer zweiten Kopfstütze (51), die von der Trägerstruktur (29) getragen wird, beweglich entlang der ersten Achse (Y) von und zu einer ersten Kopfstütze weg-/hinführend, die an der Trägerstruktur (29) befestigt ist, zwischen einer ersten Position, die in der ersten Konfiguration des Cockpits (25) eingenommen wird, und einer vierten Position, die in der zweiten Konfiguration des Cockpits (25) eingenommen wird, umfasst;
wobei die zweite Kopfstütze (51) in der dritten Position in einem ersten Abstand von der ersten Kopfstütze (50) und in der vierten Position in einem zweiten Abstand von der ersten Kopfstütze (50) angeordnet ist; wobei der zweite Abstand kleiner als der erste Abstand ist;
wobei der erste Sitz (26) die erste Kopfstütze (50) umfasst;
wobei der zweite Sitz (27) die zweite Kopfstütze (51) umfasst, die in der dritten Position angeordnet ist, und der dritte Sitz (28) die zweite Kopfstütze (51) umfasst, die in der vierten Position angeordnet ist;
wobei der Schritt viii) gleichzeitig mit dem Schritt vi) durchgeführt wird.

14. Verfahren nach einem der Ansprüche 9 bis 13, wobei die Trägerstruktur (29) definiert:
- ein erstes Sitzpolster (30) und eine erste Rückenlehne (40) des ersten Sitzes (26);
- ein zweites Sitzpolster (31) und eine zweite Rückenlehne (41) des zweiten Sitzes (27); und
- ein drittes Sitzpolster (32) und eine dritte Rückenlehne (42) des zweiten Sitzes (28);
wobei das dritte Sitzpolster (32) entlang der ersten Achse (Y) zwischen dem ersten Sitzpolster (30) und dem zweiten Sitzpolster (31) eingefügt ist;
wobei die dritte Rückenlehne (42) entlang der ersten Achse (Y) zwischen der ersten Rückenlehne (40) und der zweiten Rückenlehne (41) eingefügt ist;
wobei die dritte Seite (108) und die vierte Seite (109) die dritte Rückenlehne (42) in den jeweiligen zweiten Positionen seitlich begrenzen;
wobei das Cockpit (25) ferner Folgendes umfasst:
- eine weitere erste Seite (97), die von der Trägerstruktur (29) in einer festen Position relativ zur ersten Achse (Y) getragen wird;
- eine weitere zweite Seite (100), eine weitere dritte Seite (98) und eine weitere vierte Seite (99), die jeweils zwischen einer jeweiligen weiteren ersten und zweiten Position entlang der ersten Achse (Y) bewegbar sind;
wobei die weitere dritte Seite (98) zwischen der ersten Seite (97) und der vierten Seite (109) entlang der ersten Achse (Y) eingefügt ist;
wobei die weitere vierte Seite (99) zwischen der dritten Seite (98) und der zweiten Seite (100) entlang der ersten Achse (Y) eingefügt ist;
wobei die weitere erste Seite (97) und die weitere dritte Seite (98) das erste Sitzpolster (30) seitlich begrenzen und die weitere vierte Seite (99) und die weitere zweite Seite (100) das zweite Sitzpolster (31) in den jeweiligen weiteren ersten Positionen seitlich begrenzen;
wobei die weitere vierte Seite (99) und die weitere zweite Seite (97) das dritte Sitzpolster (32) in den jeweiligen weiteren zweiten Positionen seitlich begrenzen.
der Schritt ii) den weiteren Schritt vi) des Bewegens der weiteren zweiten Seite (100), der weiteren dritten Seite (98) und der weiteren vierten Seite (99) zu der weiteren ersten Seite (97) parallel zur ersten Achse (Y) umfasst.

## Revendications

1. Poste de pilotage (25) pour un véhicule à moteur (1), **caractérisé en ce qu'**il comprend :
- une structure de support (29) ;
- un premier côté (97 ; 107) supporté par ladite structure de support (29) ; et
- un deuxième, un troisième et un quatrième côté (100, 110 ; 98, 108 ; 99, 109) montés sur ladite structure de support (29) de manière coulissante le long d'un premier axe (Y) et chacun mobile entre une première et une deuxième position respectives espacées l'une de l'autre par rapport audit premier axe (Y) ;
ledit premier côté (97 ; 107) et ledit second côté (100 ; 110) étant opposés l'un à l'autre par rapport audit premier axe (Y) ;
ledit troisième côté (98, 108) étant interposé entre ledit premier côté (97, 107) et ledit quatrième côté (99, 109) le long dudit premier axe (Y) ;
ledit quatrième côté (99, 109) étant interposé entre ledit troisième côté (98, 108) et ledit deuxième côté (100, 110) le long dudit premier axe (Y) ;
ledit poste de pilotage (25) étant disponible dans une première configuration biplace, dans laquelle il comprend :
- un premier siège (26) délimité latéralement par ledit premier côté (97, 107) et par ledit troisième côté (98, 108) agencés dans les premières positions respectives ; et
- un deuxième siège (27) délimité latéralement par ledit quatrième côté (99 ; 109) et par ledit deuxième côté (100, 110) agencés dans les premières positions respectives ;
lesdits premier et second sièges (26, 27) étant adjacents l'un à l'autre parallèlement audit premier axe (Y) ;
ledit poste de pilotage (25) étant disponible dans une deuxième configuration monoplace, dans laquelle il comprend un seul troisième siège (28) délimité latéralement par ledit quatrième côté (99, 109) agencé dans ladite deuxième position et par ledit deuxième côté (100, 110) agencé dans ladite deuxième position.

2. Poste de pilotage selon la revendication 1, **caractérisé en ce que** ledit premier côté (97, 107) est monté de manière fixe par rapport à ladite structure de support (29) en référence audit premier axe (Y), et **en ce que** ledit deuxième côté (100, 110), ledit troisième côté (98, 108) et ledit quatrième côté (99, 109) sont agencés dans les premières positions respectives à des premières distances respectives dudit premier côté (97, 107) le long dudit premier axe (Y) et dans les deuxièmes positions respectives à des deuxièmes distances respectives, qui sont inférieures auxdites premières distances, dudit premier côté (97, 107) le long dudit premier axe (Y).

3. Poste de pilotage selon la revendication 1 ou 2, **caractérisé en ce que** ladite structure de support (29) définit :
- un premier coussin de siège (30) et un premier dossier (40) dudit premier siège (26) ;
- un deuxième coussin de siège (31) et un deuxième dossier (41) dudit deuxième siège (27) ; et
- un troisième coussin de siège (32) et un troisième dossier (42) dudit deuxième siège (28) ;
ledit troisième coussin de siège (32) étant interposé, le long dudit premier axe (Y), entre ledit premier coussin de siège (30) et ledit deuxième coussin de siège (31) ;
ledit troisième dossier (42) étant interposé, le long dudit premier axe (Y), entre ledit premier dossier (40) et ledit deuxième dossier (41).

4. Poste de pilotage selon l'une quelconque des revendications précédentes, **caractérisé en ce qu'**il comprend un accoudoir (55), qui est articulé sur ladite structure de support et est mobile entre :
- une position ouverte prise lorsque ledit poste de pilotage (25) est dans ladite première configuration biplace et dans laquelle il fait saillie de ladite structure de support (29) dans une position interposée entre lesdits premier et second sièges (26, 27) ; et
- une position fermée prise lorsque ledit poste de pilotage (25) est dans ladite deuxième configuration monoplace et dans laquelle il est logé dans un siège relatif (56) de ladite structure de support (29) agencé dans la zone dudit troisième siège (28).

5. Poste de pilotage selon l'une quelconque des revendications précédentes, **caractérisé en ce que** ledit premier siège (26) comprend un premier appui-tête (50), qui est fixe par rapport à ladite structure de support (29) ;
ladite structure de support (29) comprenant, à son tour :
- un deuxième appui-tête (51) supporté par ladite structure de support (29) de manière mobile entre une troisième position prise dans ladite première configuration et une quatrième position prise dans ladite deuxième configuration le long dudit premier axe (Y) depuis et vers le premier appui-tête (50) ;
ledit deuxième appui-tête (51) étant agencé à une première distance dudit appui-tête (50) dans ladite troisième position et à une deuxième distance dudit premier appui-tête (50) dans ladite quatrième position ; ladite deuxième distance étant inférieure à ladite première distance ;
ledit premier siège (26) comprenant ledit premier appui-tête (50) ;
ledit deuxième siège (27) comprenant ledit deuxième appui-tête (51) agencé dans ladite troisième position et ledit troisième siège (28) comprenant ledit deuxième appui-tête (51) agencé dans ladite quatrième position.

6. Poste de pilotage selon l'une quelconque des revendications précédentes, **caractérisé en ce que** ledit premier côté (97 ; 107), ledit deuxième côté (100 ; 110), ledit troisième côté (98 ; 108) et ledit quatrième côté (99 ; 109) comprennent chacun :
- un premier bord (160) contraint à ladite structure de support (29) ; et
- un deuxième bord (161) opposé audit premier bord (160) ;
ledit premier côté (97 ; 107) et ledit troisième côté (98 ; 108) divergeant l'un de l'autre, se déplaçant du premier bord respectif (160) au deuxième bord correspondant (161) ;
ledit quatrième côté (99 ; 109) et ledit deuxième côté (100 ; 110) divergeant l'un de l'autre, se déplaçant du premier bord respectif (160) au deuxième bord correspondant (161).

7. Poste de pilotage selon l'une quelconque des revendications précédentes, **caractérisé en ce que** ledit premier côté (107) et ledit troisième côté (108) délimitent latéralement ledit premier dossier (40) et ledit quatrième côté (109) et ledit deuxième côté (110) délimitent latéralement ledit deuxième dossier (41) dans les premières positions respectives ;
ledit troisième côté (108) et ledit quatrième côté (109) délimitant latéralement ledit troisième dossier (42) dans les deuxièmes positions respectives ;
ledit poste de pilotage (25) comprenant en outre :
- un premier côté supplémentaire (97) supporté par ladite structure de support (29) dans une position fixe par rapport audit premier axe (Y) ;
- un deuxième côté supplémentaire (100), un troisième côté supplémentaire (98) et un quatrième côté supplémentaire (99), chacun mobile entre des première et deuxième positions respectives supplémentaires le long dudit premier axe (Y) ;
ledit troisième côté supplémentaire (98) étant interposé entre ledit premier côté supplémentaire (97) et ledit quatrième côté supplémentaire (99) le long dudit premier axe (Y) ;
ledit quatrième côté supplémentaire (99) étant interposé entre ledit troisième côté supplémentaire (98) et ledit deuxième côté supplémentaire (100) le long dudit premier axe (Y) ;
ledit premier côté supplémentaire (97) et ledit troisième côté supplémentaire (98) délimitant latéralement ledit premier coussin de siège (30) et ledit quatrième côté supplémentaire (99) et ledit deuxième côté supplémentaire (100) délimitant latéralement ledit deuxième coussin de siège (31) dans les premières positions supplémentaires respectives ;
ledit quatrième côté supplémentaire (99) et ledit deuxième côté supplémentaire (97) délimitant latéralement ledit troisième coussin de siège (32) dans les deuxièmes positions supplémentaires respectives.

8. Véhicule à moteur (1) comprenant :
- un habitacle (3) définissant un deuxième axe (X) agencé, en cours d'utilisation, parallèlement à une direction de déplacement vers l'avant du véhicule à moteur (1) et orthogonal audit premier axe (Y) ;
- une pluralité d'éléments d'entraînement (10 ; 11, 12), qui sont logés à l'intérieur dudit habitacle (3) et peuvent être actionnés par un conducteur afin de contrôler la trajectoire et la vitesse dudit véhicule à moteur (1) ;
- au moins un élément de commande (6, 7, 9, 21) connecté à au moins un élément d'entraînement (10 ; 11, 12) par l'intermédiaire d'un mode d'entraînement par fil ; et
- ledit poste de pilotage (25) selon l'une quelconque des revendications précédentes.

9. Procédé de configuration d'un poste de pilotage (25) pour un véhicule à moteur (1) ;
ledit poste de pilotage (25) comprenant :
- une structure de support (29) ;
- un premier côté (97 ; 107) supporté par ladite structure de support (29) ; et
- un deuxième, un troisième et un quatrième côté (100, 110 ; 98, 108 ; 99, 109) montés sur ladite structure de support (29) de manière coulissante le long d'un premier axe (Y) et chacun mobile entre une première et une deuxième position respectives espacées l'une de l'autre par rapport audit premier axe (Y) ;
ledit premier côté (97 ; 107) et ledit second côté (100 ; 110) étant opposés l'un à l'autre par rapport audit premier axe (Y) ;
ledit troisième côté (98, 108) étant interposé entre ledit premier côté (97, 107) et ledit quatrième côté (99, 109) le long dudit premier axe (Y) ;
ledit quatrième côté (99, 109) étant interposé entre ledit troisième côté (98, 108) et ledit deuxième côté (100, 110) le long dudit premier axe (Y) ;
**caractérisé en ce qu'**il comprend les étapes consistant à :
i) disposer ledit poste de pilotage (25) dans une première configuration biplace, dans laquelle il comprend :
- un premier siège (26) délimité latéralement par ledit premier côté (97, 107) et par ledit troisième côté (98, 108) agencés dans des premières positions respectives ; et
- un deuxième siège (27) délimité latéralement par ledit quatrième côté (99 ; 109) et par ledit deuxième côté (100, 110) agencés dans des premières positions respectives ;
lesdits premier et second sièges (26, 27) étant adjacents l'un à l'autre parallèlement audit premier axe (Y) ;
**caractérisé en ce qu'**il comprend l'étape ii) consistant à agencer ledit poste de pilotage (25) dans une deuxième configuration monoplace, dans laquelle il comprend un seul troisième siège (28) délimité latéralement par ledit quatrième côté (99, 109) et par ledit deuxième côté (98, 108) agencés dans les deuxièmes positions respectives.

10. Procédé selon la revendication 9, **caractérisé en ce que** ladite étape ii) comprend l'étape iii) consistant à rapprocher ledit deuxième côté (100, 110), ledit troisième côté (98, 108) et ledit quatrième côté (99, 109) audit premier côté (97, 107) parallèlement audit premier axe (Y).

11. Procédé selon la revendication 9 ou 10, **caractérisé en ce qu'**il comprend l'étape iv) consistant à déplacer un accoudoir (55) articulé sur ladite structure de support (29) entre :
- une position ouverte prise lorsque ledit poste de pilotage (25) est dans ladite première configuration biplace et dans laquelle il fait saillie de ladite structure de support (29) dans une position interposée entre lesdits premier et second sièges (26, 27) ; et
- une position fermée prise lorsque ledit poste de pilotage (25) est dans ladite deuxième configuration monoplace et dans laquelle il est logé dans un siège relatif (56) de ladite structure de support (29) agencé dans la zone dudit troisième siège (28).

12. Procédé selon l'une quelconque des revendications 9 à 11, **caractérisé en ce que** ladite étape iii) comprend les étapes consistant à :
v) rapprocher ledit troisième côté (98, 108) audit premier côté (97, 107) ;
vi) rapprocher ledit quatrième côté (99, 109) audit premier côté (97, 107) ;
vii) rapprocher ledit deuxième côté (100, 110) audit premier côté (97, 107) ;
lesdites étapes v), vi) et vii) étant effectuées, dans le temps, de manière séquentielle.

13. Procédé selon la revendication 12, **caractérisé en ce qu'**il comprend l'étape viii) consistant à déplacer un deuxième appui-tête (51) supporté par ladite structure de support (29) de manière mobile le long dudit premier axe (Y) depuis et vers un premier appui-tête fixé à ladite structure de support (29) entre une première position prise dans ladite première configuration dudit poste de pilotage (25) et une quatrième position prise dans ladite deuxième configuration dudit poste de pilotage (25) ;
ledit deuxième appui-tête (51) étant disposé à une première distance dudit premier appui-tête (50) dans ladite troisième position et à une deuxième distance dudit premier appui-tête (50) dans ladite quatrième position ; ladite deuxième distance étant inférieure à ladite première distance ;
ledit premier siège (26) comprenant ledit premier appui-tête (50) ;
ledit deuxième siège (27) comprenant ledit deuxième appui-tête (51) agencé dans ladite troisième position et ledit troisième siège (28) comprenant ledit deuxième appui-tête (51) disposé dans ladite quatrième position;
ladite étape viii) étant effectuée simultanément à ladite étape vi).

14. Procédé selon l'une quelconque des revendications 9 à 13, dans lequel ladite structure de support (29) définit :
- un premier coussin de siège (30) et un premier dossier (40) dudit premier siège (26) ;
- un deuxième coussin de siège (31) et un deuxième dossier (41) dudit deuxième siège (27) ; et
- un troisième coussin de siège (32) et un troisième dossier (42) dudit deuxième siège (28) ;
ledit troisième coussin de siège (32) étant interposé, le long dudit premier axe (Y), entre ledit premier coussin de siège (30) et ledit deuxième coussin de siège (31) ;
ledit troisième dossier (42) étant interposé, le long dudit premier axe (Y), entre ledit premier dossier (40) et ledit deuxième dossier (41) ;
ledit troisième côté (108) et ledit quatrième côté (109) délimitant latéralement ledit troisième dossier (42) dans les deuxièmes positions respectives ;
ledit poste de pilotage (25) comprenant en outre :
- un premier côté supplémentaire (97) supporté par ladite structure de support (29) dans une position fixe par rapport audit premier axe (Y) ;
- un deuxième côté supplémentaire (100), un troisième côté supplémentaire (98) et un quatrième côté supplémentaire (99), chacun mobile entre des première et deuxième positions respectives supplémentaires le long dudit premier axe (Y) ;
ledit troisième côté supplémentaire (98) étant interposé entre ledit premier côté (97) et ledit quatrième côté (109) le long dudit premier axe (Y) ;
ledit quatrième côté supplémentaire (99) étant interposé entre ledit troisième côté (98) et ledit deuxième côté (100) le long dudit premier axe (Y) ;
ledit premier côté supplémentaire (97) et ledit troisième côté supplémentaire (98) délimitant latéralement ledit premier coussin de siège (30) et ledit quatrième côté supplémentaire (99) et ledit deuxième côté supplémentaire (100) délimitant latéralement ledit deuxième coussin de siège (31) dans les premières positions supplémentaires respectives ;
ledit quatrième côté supplémentaire (99) et ledit deuxième côté supplémentaire (97) délimitant latéralement ledit troisième coussin de siège (32) dans les deuxièmes positions supplémentaires respectives.
ladite étape ii) comprend l'étape supplémentaire vi) consistant à déplacer ledit deuxième côté supplémentaire (100), ledit troisième côté supplémentaire (98) et ledit quatrième côté supplémentaire (99) vers ledit premier côté supplémentaire (97) parallèlement audit premier axe (Y) .
